# EUROPÄISCHE PATENTSCHRIFT

(11) **EP 2 212 046 B1**
(45) Veröffentlichungstag und Bekanntmachung des Hinweises auf die Patenterteilung: **28.12.2016**
(21) Anmeldenummer: 08842796.8
(22) Anmeldetag: 21.10.2008
(51) Int. Cl.: B23B 51/02

(54) **WERKZEUG ZUR SPANENDEN BEARBEITUNG VON WERKSTÜCKEN**
TOOL FOR MACHINING WORK PIECES
OUTIL POUR L'USINAGE DE PIÈCES PAR ENLÈVEMENT DE MATIÈRE

(30) Priorität: 23.10.2007 DE 102007050471
(43) Veröffentlichungstag der Anmeldung: 04.08.2010
(73) Patentinhaber: MAPAL Fabrik für Präzisionswerkzeuge Dr. Kress KG, 73431 Aalen (DE)
(72) Erfinder: KRENZER, Ulrich, 90513 Zirndorf (DE)
(74) Vertreter: Gleiss, Alf-Olav
(86) Internationale Anmeldenummer: PCT/EP2008/008896
(87) Internationale Veröffentlichungsnummer: WO 2009/053028

(56) Entgegenhaltungen:
- EP-A- 1 892 070
- WO-A-2006/046227
- US-A- 5 957 631

## Beschreibung

Die Erfindung betrifft ein Werkzeug zur spanenden Bearbeitung von Werkstücken gemäß Oberbegriff des Anspruchs 1.

Ein solches Werkzeug ist aus der US-5957631-A1 bekannt

Bei den hier angesprochenen Werkzeugen handelt es sich um solche, die zur spanenden Bearbeitung von Werkstücken herangezogen werden und vorzugsweise als Bohrer ausgebildet sind. Sie umfassen einen Schaft und einen auswechselbar von diesem gehaltenen Schneideinsatz. Zur Aufnahme des Schneideinsatzes ist der Schaft mit einem Schlitz versehen, in welchen der Schneideinsatz eingesetzt wird. Werkzeuge mit auswechselbaren Schneideinsätzen ersetzen herkömmliche Werkzeuge, insbesondere Spiralbohrer, die durchgehend aus einem hochwarmfesten Schneidstoff, beispielsweise aus Hartmetall oder Hochleistungsschnellschnittstahl gefertigt sind. Bei Verschleiß dieses Bohrers werden die Schneiden so oft wie möglich nachgeschliffen beziehungsweise wieder aufbereitet. Dabei wird in der Regel auch eine Wiederbeschichtung des Schneidbereichs durchgeführt. Die dabei zunehmenden Schichtdicken und Schichteigenspannungen verhindern, dass der Spiralbohrer oft wiederaufbereitet werden kann. Zur Vermeidung dieses Nachteils wurden Werkzeuge mit einem Schaft und von diesem auswechselbar gehaltenen Schneideinsätzen geschaffen. Es hat sich herausgestellt, dass derartige modulare Werkzeuge fertigungstechnisch nur schwierig und mit erheblichen Kosten herstellbar sind. Dabei wurden auch Werkzeuge vorgeschlagen, bei denen der Schneideinsatz durch zusätzliche Befestigungselemente, insbesondere Schrauben, am Schaft fixiert werden. Ein Austausch des Schneideinsatzes, insbesondere unter beengten Raumverhältnissen, ist sehr aufwändig. Es wurden auch modulare Werkzeuge vorgeschlagen, die ohne derartige Befestigungselemente auskommen, aber keine ausreichende Stabilität aufweisen, insbesondere nicht in der Lage sind, bei der spanenden Bearbeitung von Werkstücken auftretende Kräfte sicher aufzunehmen (WO 84/03241).

Aufgabe der Erfindung ist es daher, ein Werkzeug der hier angesprochenen Art zu schaffen, das einfach aufgebaut und sehr stabil ist.

Zur Lösung dieser Aufgabe wird ein Werkzeug zur spanenden Bearbeitung von Werkstücken der oben genannten Art vorgeschlagen, welches die in Anspruch 1 genannten Merkmale umfasst. Das Werkzeug ist, wie bei bekannten modularen Werkzeugen, mit einem Schaft versehen, der einen Schlitz aufweist. In diesen ist auswechselbar ein Schneideinsatz mit einem Grundkörper eingesetzt. Das Werkzeug zeichnet sich dadurch aus, dass der Grundkörper in einem Zentralabschnitt mit einer konvex gekrümmten Zentrierfläche versehen ist, die in Richtung seiner Mittelachse verläuft. Von diesem Zentralabschnitt geht mindestens ein Mitnehmer aus. Die Zentrierflächen des Zentralabschnittes bilden Teilflächen eines gedachten Kegelabschnittsmantels. Sie verlaufen also konisch zur Vorderseite des Werkzeugs. Der Grundkörper dieses Schneideinsatzes ist damit sehr kompakt aufgebaut. Er wird durch die konvex gekrümmten Zentrierflächen des Zentralabschnitts so im Schlitz des Schafts zentriert, dass sehr hohe Querkräfte, wie sie bei der üblichen Zerspanung von Werkstücken auftreten, sicher aufgenommen werden können.

Bei einem besonders bevorzugten Ausführungsbeispiel ist vorgesehen, dass der Grundkörper 2 von dem Zentralabschnitt ausgehende Mitnehmer umfasst, die vorzugsweise auf gegenüberliegenden Seiten des Zentralabschnitts angeordnet sind. Auch dadurch wird sichergestellt, dass der Schneideinsatz sicher im Schaft gehalten wird.

Besonders bevorzugt wird ein Ausführungsbeispiel, das sich dadurch auszeichnet, dass die beiden Mitnehmer jeweils Mitnahmeflächen aufweisen, die mit einer Ebene, in der die Mittelachse des Grundkörpers liegt, einen spitzen Winkel einschließen. Dabei ist vorgesehen, dass die beiden Mitnahmeflächen in Richtung auf die Vorderseite des Werkzeugs von verschiedenen Seiten auf diese Ebene konvergieren. Diese Ausgestaltung zeichnet sich dadurch aus, dass der Schneideinsatz besonders sicher im Schaft des modularen Werkzeugs gehalten wird.

Ein weiteres besonders bevorzugtes Ausführungsbeispiel des Werkzeugs zeichnet sich dadurch aus, dass eine Kühl-/Schmiermittelversorgung vorgesehen ist und dass im Berührungsbereich zwischen der Außenseite des Schneidkörpers und der Innenfläche des diesen aufnehmenden Schlitzes im Schaft ein Kühl-/Schmiermittelkanal vorgesehen ist, über den die mindestens eine geometrisch definierte Schneide des Schneideinsatzes mit dem Kühl-/Schmiermittel versorgt werden kann. Da der Schneideinsatz selbst nicht durch irgendwelche Kühl-/Schmiermittelkanäle geschwächt ist, zeichnet sich dieses Werkzeug durch eine hohe Stabilität aus.

Weitere Ausgestaltungen ergeben sich aus den übrigen Unteransprüchen.

Die Erfindung wird im Folgenden anhand der Zeichnungen näher erläutert. Es zeigen:
- Figur 1: den vorderen Teil des Werkzeugs mit einem Schneideinsatz in Seitenansicht;
- Figur 2: das Werkzeug mit Schneideinsatz in Stirnansicht;
- Figur 3: den Schaft des Werkzeugs ohne Schneideinsatz einmal in Seitenansicht und einmal in Stirnansicht;
- Figur 4: den Schneideinsatz in Stirnseitenansicht sowie in zwei Seitenansichten und
- Figur 5: ein Ausführungsbeispiel des Werkzeugs mit einem Kühl-/Schmiermittelkanal in Stirnseiten- und in Schnittansicht.

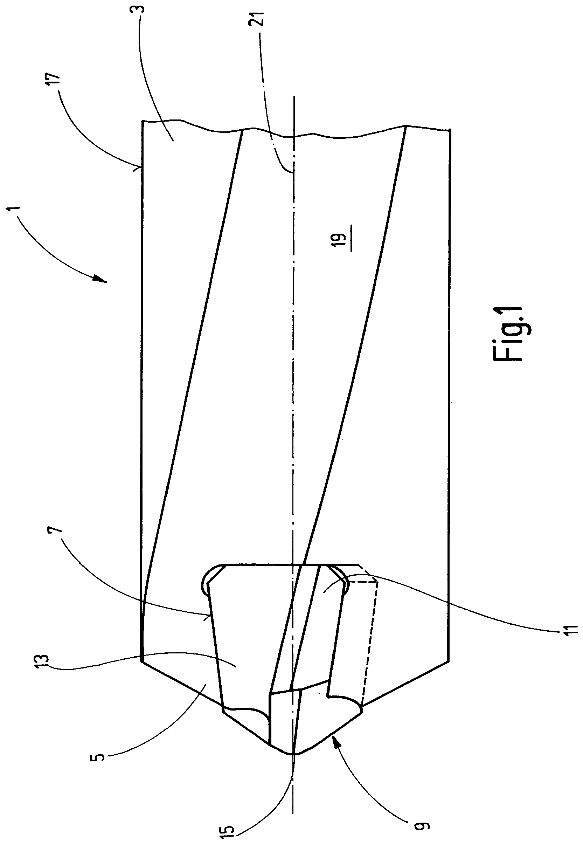

Der vordere Teil eines Werkzeugs 1 zur spanenden Bearbeitung von Werkstücken ist in Figur 1 in Seitenansicht dargestellt. Es handelt sich hier um ein als Spiralbohrer ausgebildetes Werkzeug mit einem Schaft 3, der im Bereich seines Vorderendes 5 mit einem Schlitz 7 ausgestattet ist, welcher einen Schneideinsatz 9 aufnimmt. Der Grundkörper 11 des Schneideinsatzes 9 umfasst einen auch als Kern bezeichneten Zentralabschnitt 13, der, wie unten näher ausgeführt, konisch ausgebildete Bereiche aufweist, die sich in Richtung auf die Vorderseite 15 des Werkzeugs 1 verjüngen. In die Umfangsfläche 17 des Schafts 3 ist vorzugsweise eine Span-Nut 19 eingebracht, die hier in Figur 1 dem Betrachter zugewandt und bezüglich der Dreh- beziehungsweise Mittelachse 21 entlang einer gedachten Schraubenlinie verläuft. Denkbar ist es auch, dass diese parallel zur Mittelachse 21 ausgebildet ist.

Der Schaft 3 des Werkzeugs 1 ist in Figur 1 abgebrochen dargestellt. Er kann an seinem der Vorderseite 15 des Werkzeugs 1 gegenüberliegenden Ende beliebig ausgebildet und auf unterschiedliche Befestigungsarten ausgelegt sein.

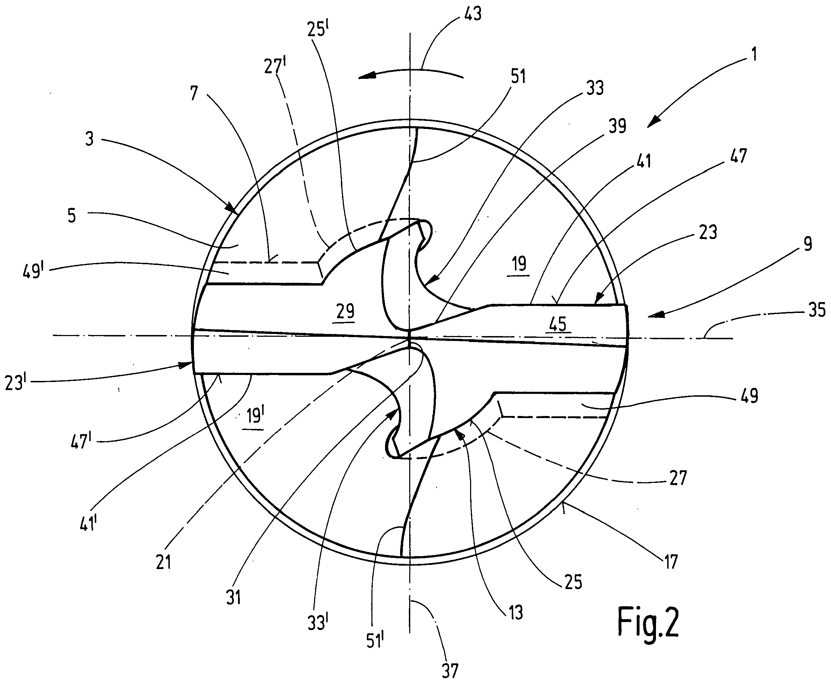

Das in Figur 1 dargestellte Werkzeug ist in Figur 2 in Stirnansicht wiedergegeben. Gleiche Teile sind mit gleichen Bezugsziffern versehen, sodass insofern auf die vorangegangene Beschreibung verwiesen wird.

Das Werkzeug weist also einen Schaft 3 auf, in den in seinem Vorderende 5 ein Schlitz 7 eingebracht ist, in den der Schneideinsatz 9 eingesetzt ist. In der Draufsicht ist zu erkennen, dass der Schneideinsatz 9 einen Zentralabschnitt 13 umfasst, von dem mindestens ein Mitnehmer 23 ausgeht. Bei dem hier dargestellten Werkzeug 1 ist der Schneideinsatz 9 punktsymmetrisch zur Mittelachse 21 ausgebildet. Er weist daher zwei identische an gegenüberliegenden Seiten des Zentralabschnitts 13 entspringende Mitnehmer 23 und 23' auf. Der Zentralabschnitt 13 weist eine Mittelachse auf, die, wie aus Figur 1 ersichtlich, mit der Mittelachse 21 des Werkzeugs 1 zusammenfällt. Er weist mindestens eine, hier zwei gegenüberliegende, im Wesentlichen in Richtung der Mittelachse 21 verlaufende Zentrierflächen 25 und 25' auf, die konvex gekrümmt sind und, wie aus Figur 1 ersichtlich, Teilflächen eines gedachten Kegelabschnittsmantels sind, der sich zur Vorderseite 15 des Werkzeugs 1 verjüngt. Dies ist durch die gestrichelten Linien 27, 27' in Figur 2 angedeutet.

Der Schneideinsatz 9 weist mindestens eine geometrisch definierte Schneide auf, mit deren Hilfe von einem Werkstück Späne abgetragen werden. Dazu ist eine Relativdrehung zwischen Werkstück und Werkzeug 1 erforderlich. In der Regel wird das Werkzeug 1 gegenüber einem stillstehenden Werkstück in Rotation versetzt.

An der Stirnseite 29 des Schneideinsatzes 9 ist eine die Mittelachse 21 unter einem Winkel schneidende Querschneide 31 zu sehen, deren Länge durch Ausspitzungen 33, 33' begrenzt ist. Im Folgenden wird auf den Bereich des Schneideinsatzes 9 eingegangen, der oberhalb einer gedachten horizontalen Linie 35 liegt, die im Bereich der Mittellinie 21 von einer gedachten vertikalen Linie 37 geschnitten wird. Es ist erkennbar, dass von der Querschneide 31 eine Zentrumsschneide 39 ausgeht, die unter einem spitzen Winkel zur horizontalen Linie 35 verläuft und die hier unter Ausbildung eines Knicks in eine Hauptschneide 41 des Schneideinsatzes 9 übergeht. Die hier beschriebene Ausgestaltung des Schneideinsatzes 9 im Bereich der Stirnseite 29 ist grundsätzlich bekannt, sodass hier nicht näher darauf eingegangen wird. Zur Verdeutlichung wird noch darauf hingewiesen, dass der untere Bereich des Schneideinsatzes 9, also derjenige, der unterhalb der horizontalen Linie 35 liegt, punktsymmetrisch ausgestaltet ist.

Von der Zentrums- und Hauptschneide 39, 41 abgetragene Späne gelangen in den von der Span-Nut 19 gebildeten Spanraum und können abtransportiert werden. Bei der Bearbeitung eines Werkstücks dreht sich das Werkzeug 1 bei der Ansicht gemäß Figur 2 gegen den Uhrzeigersinn, was durch einen Pfeil 43 angedeutet ist.

Aus Figur 2 wird deutlich, dass auch der Schaft 3 des Werkzeugs 1 punktsymmetrisch ausgebildet ist und entsprechend eine zweite Span-Nut 19' aufweist, die ebenfalls dazu dient, Späne aufzunehmen, die bei der Bearbeitung eines Werkstücks anfallen. Im Bereich der Stirnseite 29 ist anschließend an die Zentrumsschneide 39 und die Hauptschneide 41 eine Freifläche 45 vorgesehen, die ausgehend von den genannten Schneiden unter einem spitzen Winkel abfällt, in Figur 2 in die Bildebene dieser Darstellung hinein.

Die Mitnehmer 23, 23' weisen auf ihrer Vorderseite, die in die durch den Pfeil 43 angedeuteten Drehrichtung weist und senkrecht oder unter einem spitzen Winkel in die Bildebene von Figur 2 abfällt jeweils eine Spanfläche 47, 47' auf, auf der die von der Hauptschneide 41, 41' abgetragenen Späne ablaufen. Die von der Zentrumsschneide 39 abgetragenen Späne laufen auf der Oberfläche der Ausspitzung 33 ab.

Die Mitnehmer 23, 23' weisen auf ihrer den Spanflächen 47, 47' gegenüberliegenden Seite Mitnahmeflächen 49, 49' auf, die im Wesentlichen parallel zu einer Ebene verlaufen, in der die Mittelachse 21 des Werkzeugs 1 und außerdem die gedachte horizontale Linie 35 liegen. Bei dem hier dargestellten Ausführungsbeispiels des Werkzeugs 1 sind die Mitnahmeflächen 49, 49' geneigt und auf gegenüberliegenden Seiten der gedachten Ebene, also der horizontalen Linie 35, angeordnet und konvergieren in Richtung auf die Vorderseite 15, also auf die Stirnseite 29 des Schneideinsatzes 9. Durch diese Ausgestaltung und durch die konischen Zentrierflächen 25, 25' des Zentralabschnitts 13 wird der Schneideinsatz 9 sicher im Schaft 5 des Werkzeugs 1 gehalten, wenn dieses aus einer bearbeiteten Bohrung eines Werkstücks herausgezogen wird.

Aus der Darstellung gemäß Figur 2 ist ersichtlich, dass die mindestens eine Span-Nut 19, hier also die beiden Span-Nuten 19 und 19', eine Begrenzungswand 51, 51' aufweisen. In Figur 2 ist der Schneideinsatz 9 in seiner im Schaft 3 fixierten Position dargestellt. Zum Austausch des Schneideinsatzes 9 wird dieser gegenüber dem Schaft 3 des Werkzeugs 1 verdreht, sodass er eine Relativdrehung gegenüber dem Schaft 3 durchführt, und zwar in Richtung des Pfeils 43. Die Relativdrehung ist so weit möglich, bis die Spanflächen 47, 47' des Schneideinsatzes 9 an den Begrenzungswänden 51, 51' anschlagen und eine weitere Drehung verhindern. In dieser durch den Anschlag definierten Endposition ist der Schneideinsatz 9 aus dem Schaft 3 entnehmbar, indem er in Richtung der Mittelachse 21 herausgezogen wird. Dabei bewegt er sich bei der Stirnansicht gemäß Figur 2 auf den Betrachter zu.

Es wird deutlich, dass ein Austausch des Schneideinsatzes 9 sehr leicht möglich ist, weil es lediglich einer Relativdrehung zwischen diesem und dem Schaft 3 des Werkzeugs 1 bedarf. Bei einer Drehung gegen den Uhrzeigersinn gemäß Pfeil 43 in Figur 2 wird der Schneideinsatz 9 gelöst und kann in axialer Richtung abgezogen werden. Beim Einsetzen des Schneideinsatzes wird dieser so in den Schlitz 7 des Schafts 3 eingeführt, dass dessen Spanflächen 47, 47' an den Begrenzenwänden 51, 51' anliegen. Nach dem Einsetzen des Schneideinsatzes 9 kann dieser entgegen dem Pfeil 43 in Figur 2 im Uhrzeigersinn gegenüber dem Schaft 3 des Werkzeugs 1 verdreht und in die Montageposition gemäß Figur 2 verlagert werden.

Da bei der Bearbeitung eines Werkstücks die Mitnehmer 23, 23' gegen die Mitnahmeflächen 49, 49' angepresst werden, bedarf es keiner Befestigungsmittel, um den Schneideinsatz 9 am Schaft 3 des Werkzeugs 1 zu fixieren. Selbst beim Herausziehen des Werkzeugs 1 aus einer bearbeiteten Bohrung wird der Schneideinsatz 9 aufgrund der Ausgestaltung der Mitnehmerflächen 49, 49' und der konischen Ausgestaltung des Zentralabschnitts 13 im Schaft 3 des Werkzeugs 1 fixiert.

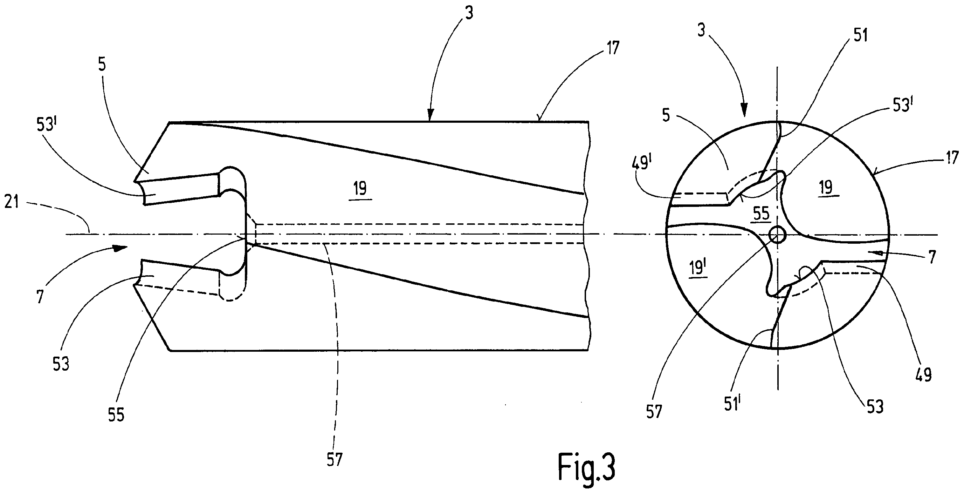

Figur 3 zeigt den Schaft 3 des anhand der Figuren 1 und 2 erläuterten Werkzeugs, allerdings ohne den Schneideinsatz 9. Gleiche Teile sind mit gleichen Bezugsziffern versehen, sodass insofern auf die vorangegangene Beschreibung verwiesen wird. Der Schaft 3 weist an seiner Vorderseite 5 einen Schlitz 7 auf, der dazu dient, den Schneideinsatz 9 auswechselbar aufzunehmen. In Figur 3 ist links der abgebrochene vordere Teil des Werkzeugs 1 zu sehen. Da der Schneideinsatz 9 fehlt, kann man das Innere des Schlitzes 7 sehen, insbesondere einen als Stützfläche dienenden Innenflächenbereich 53 unterhalb der Mittellinie 21, der durch eine gestrichelte Linie angedeutet ist sowie einen Innenflächenbereich 53' oberhalb der Mittellinie 21. Gerade hier wird deutlich, dass die Innenflächenbereiche 53, 53' konkav ausgebildet und derart auf die Zentrierflächen 25, 25' des Schneideinsatzes 9 abgestimmt sind, dass sie den gleichen Krümmungsradius aufweisen und ebenfalls unter einem Winkel in Richtung auf die Mittelachse 21 angeordnet sind. Dieser Winkel öffnet sich in Figur 3 nach rechts, sodass sich die Innenflächenbereiche 53, 53' in Richtung auf die Vorderseite 5 des Schafts 3 verjüngen, sie bilden also wie die Zentrierflächen 25, 25' Teilflächen eines gedachten Kegelabschnittsmantels, der sich in Richtung zur Vorderseite 15 des Werkzeugs 1 verjüngt.

In Figur 3 ist links der Schaft 3, wie in Figur 1, in Seitenansicht dargestellt. Es zeigt sich, dass der Grund 55 des Schlitzes 7 eben ausgebildet ist und im Wesentlichen senkrecht zur Mittelachse 21 verläuft. Er wird von der mindestens einen Span-Nut 19 geschnitten, bei dem Ausführungsbeispiel des Werkzeugs 1, wie es hier beschrieben wurde, von beiden Span-Nuten 19 und 19'.

Auf dem Grund 55 liegt der Schneideinsatz 9 an. Bei der Bearbeitung eines Werkstücks werden die auftretenden axialen, das heißt in Richtung der Mittelachse 21 wirkenden, Kräfte von dem Schaft 3 auf diese Weise abgefangen.

Das Werkzeug 1 ist vorzugsweise mit einer Kühl-/Schmiermittelvorrichtung verbunden, über die ein Fluid bei der Bearbeitung eines Werkstücks zu den aktiven Schneiden des Schneideinsatzes 9 geleitet wird. Bei dem hier dargestellten Ausführungsbeispiels des Werkzeugs weist der Schaft 3 einen konzentrisch zur Mittelachse 21 verlaufenden Kühl-/Schmiermittelkanal 57 auf. Denkbar ist es auch, mehrere derartige Kanäle vorzusehen. Dieser Kanal mündet im Bereich des Grundes 55, sodass hier vorhandenes Kühl-/Schmiermittel zu den aktiven Schneiden gelangen kann.

In Figur 3 ist rechts der Schaft 3 in Stirnseitenansicht dargestellt, ähnlich Figur 2. Es ist hier allerdings der Schneideinsatz 9 weggelassen, sodass man den Grund 55 des Schlitzes 7 erkennen kann, außerdem die Mündung des Kühl-/Schmiermittelkanals 57.

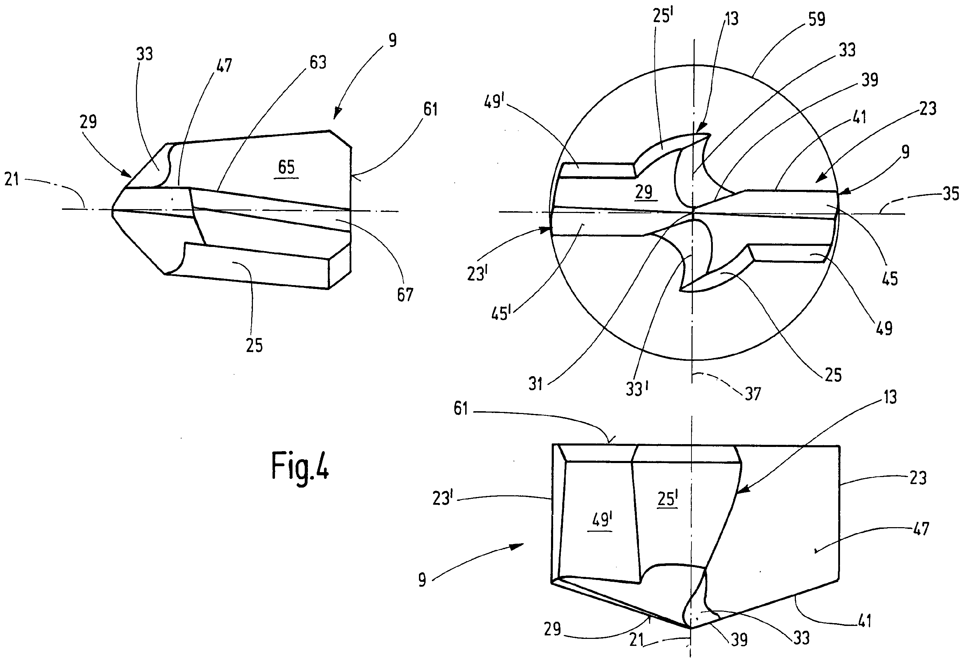

Figur 4 zeigt den Schneideinsatz 9 ohne den Schaft 3 des Werkzeugs 1 und zwar oben links in Seitenansicht wie in Figur 1, oben rechts in Stirnseitenansicht wie in Figur 2. Durch einen Kreis 59 ist hier die Umfangsfläche des fehlenden Schafts angedeutet. Unterhalb der Stirnseitenansicht findet sich wiederum eine Seitenansicht des Schneideinsatzes 9, wobei dieser gegenüber der Darstellung oben links um 90° gedreht ist. Gleiche Teile sind mit gleichen Bezugsziffern versehen, sodass insofern auf die vorangegangene Beschreibung verwiesen wird.

Oben links in Figur 4 wird deutlich, dass die der Stirnseite gegenüberliegende Grundfläche des Schneideinsatzes eben ausgebildet ist und im Wesentlichen senkrecht zur Mittelachse 21 verläuft. Sie dient als Anlagefläche 61, mit der sich der Schneideinsatz 9 bei Verwendung des Werkzeugs 1 am Grund 55 des Schlitzes 7 im Schaft 3 abstützt.

Der Schneideinsatz 9 des hier beschriebenen Werkzeugs 1 zeichnet sich dadurch aus, dass sein Grundkörper 11 einen Zentralabschnitt 13 aufweist, der konisch ausgebildet ist und die mindestens eine Zentrierfläche 25, 25' aufweist. Die mindestens eine Zentrierfläche 25, 25' bildet also zumindest bereichsweise die Außenfläche des Zentralabschnitts 13; sie reicht vorzugsweise bis zur Stirnseite 29 des Schneideinsatzes. Es ist also der Grundkörper beziehungsweise Zentralabschnitt selbst, der den Schneideinsatz 9 in dem Schaft 3 eines Werkzeugs zentriert und auch axial fixiert. Gerade Figur 4 zeigt deutlich, dass der Schneideinsatz 9 im Bereich seiner Grundfläche, die als Anlagefläche 61 dient, keine Fortsätze irgendeiner Art aufweist, die, wie es bei bekannten Werkzeugen der Fall ist, zur Fixierung des Schneideinsatzes 9 im Schaft 3 eines Werkzeugs 1 dienen. Der Schneideinsatz 9 ist also, in Richtung der Mittelachse 21 gemessen, sehr kurz ausgebildet, so dass entsprechend die Tiefe des den Schneideinsatz 9 aufnehmenden Schlitzes 7 im Schaft 3 des Werkzeugs 1 relativ klein sein kann. Dies führt zu einer sehr stabilen Ausgestaltung des gesamten Werkzeugs 1 und auch dazu, dass sowohl die Fertigung des Schneideinsatzes 9 als auch des Schaftes 3 relativ einfach und damit kostengünstig ist.

Überdies zeigt sich auch, dass durch den einfachen Aufbau des Schneideinsatzes 9, und durch die Vermeidung irgendwelcher in axialer Richtung verlaufender Fortsätze desselben eine Kühl-/Schmiermittelversorgung auf einfache Weise möglich ist: Ein Kühl-/Schmiermittelkanal 57 kann, wie oben erläutert, am Grund 55 des in Figur 3 erläuterten Schlitzes 7 des Schaftes 3 münden.

Die Seitenansicht in Figur 4 zeigt auch die Ausspitzung 33 und die Hauptschneide 41, an die sich eine Nebenschneide 63 anschließt. Von dieser abgetragene Späne gelangen in einen Spanraum 65, der sich in die Span-Nut 19 im Schaft 3 fortsetzt. An die Nebenschneide 63 grenzt eine Stützfläche 67 an, über die sich der Schneideinsatz 9 und damit das Werkzeug 1 an der Wand einer hergestellten oder aufgebohrten Bohrung abstützt.

Oben rechts in Figur 4 ist der Schneideinsatz 9, wie gesagt in Stirnseitenansicht dargestellt. Deutlich erkennbar sind die Stirnseite 29, die Querschneide 31, die Ausspitzung 33, 33', die Zentrumsschneide 39 und die Hauptschneide 41.

Besonders deutlich zu sehen sind hier die Zentrierflächen 25 und 25' des Zentralabschnitts 13, weil diese nicht durch das Material des Schafts 3 verdeckt werden. Dies gilt auch für die Mitnahmeflächen 49 und 49' der vom Zentralabschnitt 13 ausgehenden Mitnehmer 23 und 23'.

Aus der Seitenansicht rechts unten in Figur 4 ist der um 90° gegenüber der Darstellung oben links in Figur 4 verdrehte Schneideinsatz 9 erkennbar. Gleiche Teile sind mit gleichen Bezugsziffern versehen, sodass auf die vorangegangene Beschreibung verwiesen wird. Deutlich zu sehen sind hier die sich an die Hauptschneide 41 anschließende Spanfläche 47, die Zentrierfläche 25' des Zentralabschnitts 13 sowie die Mitnahmefläche 49' des Mitnehmers 23'. Auch in dieser Ansicht ist die eben ausgebildete Anlagefläche 61 des Schneideinsatzes 9 zu sehen. Es ist sehr wohl möglich, in die Anlagefläche 61 Vertiefungen einzubringen, um einen Freiraum zwischen dem Grund 55 des Schlitzes 7 der Anlagefläche 61 zu schaffen, über den ein Kühl-/Schmiermittel bis zu den aktiven Schneiden des Schneideinsatzes 9 gelangen kann. Es ist auch denkbar, in den aus Figur 3 ersichtlichen Grund 55 des Schlitzes 7 bis zur Mündung des Kühl-/Schmiermittelkanals 57 verlaufende Rinnen vorzusehen, um einen derartigen Freiraum zu schaffen. Außerdem können Rinnen sowohl im Grund 55 als auch in der Anlagefläche 61 vorgesehen werden.

Hier wird Folgendes deutlich: Das Werkzeug 1 zeichnet sich dadurch aus, dass der Schneideinsatz 9 an seinem seiner Stirnseite 29 gegenüberliegenden Ende eine Grundfläche aufweist, die als Anlagefläche 61 dient und sich am Grund 55 des Schlitzes 7 im Schaft 3 abstützt. Durch Vertiefungen, insbesondere Rinnen, die in die Anlagefläche 61 des Schneideinsatzes 9 und/oder in den Grund 5 des Schlitzes 7 eingebracht werden können und bis zur Mündung des Kühl-/Schmiermittelkanals 57 verlaufen, kann eine Kühl-/Schmiermittelversorgung sichergestellt werden. Dabei ist es sehr wohl möglich, dass die Anlagefläche 61 des Schneideinsatzes 9 sicher am Grund 5 des Schlitzes 7 anliegt, so dass bei der Bearbeitung eines Werkstücks in den Schneideinsatz 9 eingeleitete Kräfte in den Schaft 3 übergeleitet werden.

Dadurch, dass ein Kühlmittel aus einer zentralen Versorgung aus der Mündung des Kühl-/Schmiermittelkanals 57 austritt und an der Grundfläche des Schneideinsatzes 9 entlang strömt, wird eine sehr gute Kühlung des Schneideinsatzes 9 sichergestellt.

Ein Vergleich der Seitenansichten des Schneideinsatzes 9 in Figur 4 zeigt, dass dieser so breit ist, wie der Durchmesser des Schafts 3, dass jedoch dessen Dicke geringer als die Breite ist.

Es zeigt sich auch, dass der Zentralabschnitt 13 konisch ausgebildet ist und sich in Richtung der Stirnseite 29 des Schneideinsatzes 9 verjüngt, um einen sicheren Halt des Schneideinsatzes 9 im Schaft 3 zu gewährleisten, wobei die Zentrierflächen 25 und 25' des Zentralabschnitts 13 dazu dienen, den Schneideinsatz 9 zentrisch im Schaft 3 des Werkzeugs 1 zu halten, auch wenn bei der Bearbeitung eines Werkstücks starke Querkräfte auf den Schneideinsatz 9 wirken. Da die Zentrierflächen 25, 25' unmittelbar am Grundkörper 11 des Schneideinsatzes 9, nämlich im Bereich des Zentralabschnitts 13 vorgesehen sind, können hohe Kräfte aufgefangen werden, weil der Grundkörper 11 zur Aufnahme derartiger Kräfte keinerlei Fortsätze oder Vorsprünge aufweisen muss, die von dessen Grundfläche ausgehen und stets schwächer als der Grundkörper 11 selbst wären.

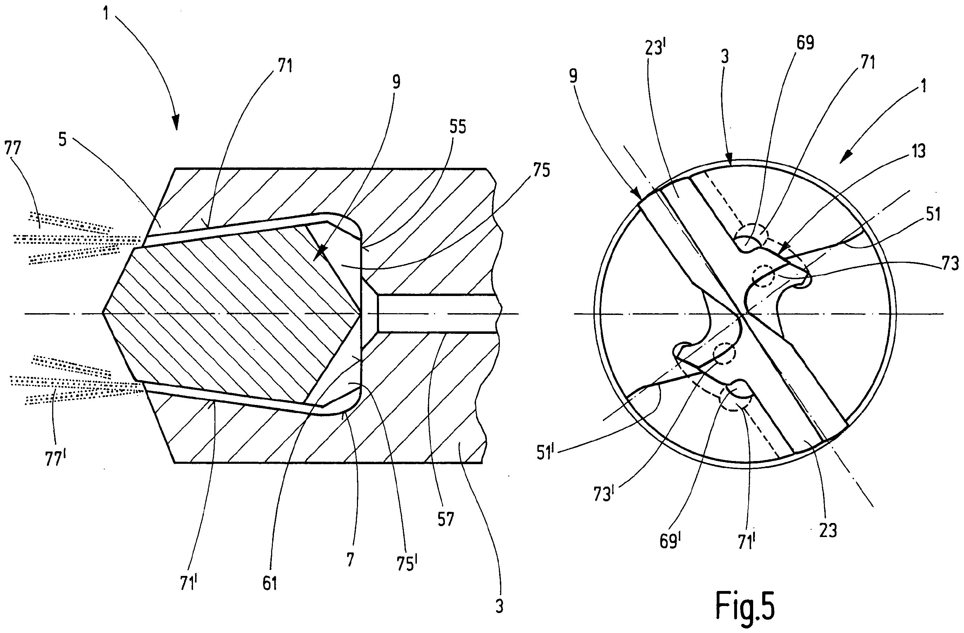

Figur 5 zeigt ein abgewandeltes Ausführungsbeispiel eines Werkzeugs 1. Gleiche und funktionsgleiche Teile sind mit gleichen Bezugsziffern versehen, sodass insofern auf die Beschreibung zu den Figuren 1 bis 4 verwiesen wird.

Rechts in Figur 5 ist das Werkzeug 1 in Stirnseitenansicht wiedergegeben. Es ist dabei gegenüber der Darstellung in Figur 2 um zirka 45° im Uhrzeigersinn verdreht. In den Schaft 3 ist der Schneideinsatz 9 eingesetzt, der einen Zentralabschnitt 13 und mindestens einen, hier zwei Mitnehmer 23, 23' aufweist.

Der Unterschied gegenüber dem anhand der Figur 1 bis 4 beschriebenen Werkzeug 1 besteht darin, dass im Berührungsbereich zwischen dem Schneideinsatz 9 und dem Schaft 3 mindestens ein Kühl-/Schmiermittelkanal 69, 69' ausgebildet ist. Dies kann, wie in Figur 5 rechts dargestellt, dadurch geschehen, dass in die Innenfläche des Schlitzes 7 eine Nut 71, 71' eingebracht wird, sodass ein Freiraum zwischen Schaft 3 und Schneideinsatz 9 entsteht, damit der Kühl-/Schmiermittelkanal 69. Sehr wohl ist es auch denkbar, eine Vertiefung in den Schneideinsatz 9 oder in beiden Teilen, also sowohl im Schaft 3 als auch im Schneideinsatz 9 vorzusehen, um einen derartigen Kühl-/Schmiermittelkanal 69 zu realisieren.

Bei dem in Figur 5 dargestellten Ausführungsbeispiel ergibt sich vorzugsweise folgendes:
Durch von der Mündung des Kühl-/Schmiermittelkanals 57 ausgehende Vertiefungen kann das Kühlmittel zwischen dem Grund 55 des Schlitzes 7 im Schaft 3 und der Anlagefläche 61 des Schneideinsatzes 9 entlang strömen. Zusätzlich fließt es durch die Kühl-/Schmiermittelkanäle 69, die am Zentralabschnitt 13 des Grundkörpers 11 des Schneideinsatzes 9 entlang verlaufen, damit praktisch über die gesamte Höhe des Schneideinsatzes 9. Auf diese Weise werden die Grundfläche des Schneideinsatzes 9 und zusätzlich auch die Seiten- und Außenflächen von dessen Grundkörper 11 optimal gekühlt. Der Schneideinsatz 9 wird also nicht nur im Bereich seiner als Anlagefläche 61 dienenden Grundfläche sondern auch seitlich bis zu seiner Stirnseite 29 gekühlt. Da das aus dem Kühl-/Schmiermittelkanal unmittelbar vor der Stirnseite 29 des Schneideinsatzes 9 austritt, wird auch für eine besonders gute Schmierung der Schneiden desselben gesorgt.

Denkbar ist es darüber hinaus auch, im Grundkörper 11 des Schneidansatzes 9 mindestens einen, hier zwei, Kühl-/Schmiermittelkanal(e) 73, 73' vorzusehen, der/die den Grundkörper 11 des Schneideinsatzes 9 durchdringt/durchdringen und beispielsweise durch hier gestrichelt angedeutete Bohrungen realisiert wird/werden.

Der im Berührungsbereich zwischen Schneideinsatz 9 und Schaft 3 gebildete mindestens eine Kühl-/Schmiermittelkanal 69, 69' sowie der mindestens eine den Grundkörper 11 des Schneideinsatzes 9 durchdringende Kühl-/Schmiermittelkanal 73/73' steht mit einem Freiraum zwischen dem Schneideinsatz 9 und dem Grund 55 des Schlitzes 7 in Verbindung und damit mit einem Kühl-/Schmiermittelkanal 57, der den Schaft 3 durchdringt, wie dies anhand von Figur 3 erläutert wurde.

In Figur 5 ist links der vorderste Teil des Werkzeugs 1 im Längsschnitt dargestellt. Gleiche Teile sind mit gleichen Bezugsziffern versehen, sodass insofern auf die Beschreibung zu den vorangegangenen Figuren verwiesen wird.

Aus der Schnittdarstellung ist erkennbar, dass der Schneideinsatz 9 im Bereich der Anlagefläche 61 mindestens eine, hier zwei Nuten 75, 75' aufweist, durch die ein Freiraum geschaffen wird. Die Nuten stehen in Fluidverbindung mit dem Kühl-/Schmiermittelkanal 57 im Schaft 3, außerdem mit den im Berührungsbereich zwischen Schaft 3 und Schneideinsatz 9 vorgesehenen Nuten 71, 71', sodass ein durch den Kühl-/Schmiermittelkanal 57 im Schaft 3 herangefördertes Kühl-/Schmiermittel über den Freiraum, hier also über die Nuten 75, 75' zu den Nuten 71, 71' gelangen und vorne aus dem Werkzeug 1 austreten kann, was hier durch Striche 77, 77' lediglich angedeutet ist. Damit können die aktiven Schneiden des Schneideinsatzes 9 gekühlt und geschmiert werden. Das Kühl-/Schmiermittel sorgt auch dafür, dass die von den Schneiden abgetragenen Späne sicher über die Span-Nuten 19, 19' abgeführt werden und die bearbeitete Oberfläche in dem Werkstück nicht beeinträchtigen.

Auch bei dem in Figur 5 dargestellten Ausführungsbeispiel des Werkzeugs 1 wird der Schneideinsatz 9 in die Vorderseite 5 des Schafts 3 eingesetzt und durch eine Drehbewegung fixiert beziehungsweise gelöst, wie dies anhand von Figur 2 ausführlich erläutert wurde. Auch hier sind also keine zusätzlichen Befestigungsmittel, beispielsweise Schrauben oder dergleichen, erforderlich, um den Schneideinsatz 9 sicher im Schaft 3 so zu verankern, dass Querkräfte vom Grundkörper 11 des Schneideinsatzes 9 in den Schlitz 7 des Schafts 3 übergeleitet und sicher abgefangen werden.

## Patentansprüche

1. Werkzeug (1) zur spanenden Bearbeitung von Werkstücken mit
- einem Schaft (3) und mit
- einem von diesem auswechselbar gehaltenen, einen Grundkörper (11) aufweisenden Schneideinsatz (9), wobei
- der Schaft (3) einen der Aufnahme des Schneideinsatzes (9) dienenden Schlitz (7) umfasst,
- wobei der Grundkörper (11) einen Zentralabschnitt (13) mit einer Mittelachse (21) und mit mindestens einer im Wesentlichen in deren Richtung verlaufenden konvex gekrümmten Zentrierfläche (25,25') aufweist, außerdem
- mindestens einen von dem Zentralabschnitt (13) ausgehenden Mitnehmer (23,23'), wobei
- der Schlitz (7) im Schaft (3) wenigstens einen mit der mindestens einen Zentrierfläche (25,25') zusammenwirkenden Innenflächenbereich (53,53') aufweist, wobei
- die Zentrierflächen (25,25') Teilflächen eines gedachten Kegelabschnittsmantels sind, der sich zur Vorderseite (15) des Werkzeugs (1) verjüngt, und wobei
- der Innenflächenbereich (53,53') des Schlitzes (7) entsprechend ausgebildet ist,
**dadurch gekennzeichnet, dass**
- die mindestens eine Zentrierfläche (25,25') bis zu einer Stirnseite (29) des Grundkörpers (11) des Schneideinsatzes (9) reicht.

2. Werkzeug nach Anspruch 1, **dadurch gekennzeichnet, dass** die mindestens eine Zentrierfläche (25,25') die Außenfläche des Zentralabschnitts (13) des Grundkörpers (11) bildet.

3. Werkzeug nach einem der vorhergehenden Ansprüche, **dadurch gekennzeichnet, dass** der mindestens eine Mitnehmer (23,23') eine Mitnehmerfläche (49,49') aufweist, die sich an einer im Schlitz (7) des Schafts (3) ausgebildeten Stützfläche (Innenflächenbereich (53,53')) abstützt.

4. Werkzeug nach einem der vorhergehenden Ansprüche, **dadurch gekennzeichnet, dass** der Grundkörper (11) zwei Mitnehmer (23,23') aufweist.

5. Werkzeug nach Anspruch 4, **dadurch gekennzeichnet, dass** die Mitnehmer (23,23') einander gegenüberliegend von dem Zentralabschnitt (13) entspringen.

6. Werkzeug nach einem der Ansprüche 3 bis 5, **dadurch gekennzeichnet, dass** die mindestens eine Mitnehmerfläche (49,49') mit einer Ebene, in der die Mittelachse (21) des Grundkörpers (11) des Schneideinsatzes (9) liegt, einen spitzen Winkel einschließt.

7. Werkzeug nach Anspruch 6, **dadurch gekennzeichnet, dass** die Mitnehmerflächen (49,49') zweier Mitnehmer (23,23') in Richtung auf die Vorderseite (15) des Werkzeugs (1) konvergieren.

8. Werkzeug nach einem der vorhergehenden Ansprüche, **dadurch gekennzeichnet, dass** der Grundkörper (11) des Schneideinsatzes (9) punktsymmetrisch zu seiner Mittelachse (21) ausgebildet ist.

9. Werkzeug nach einem der vorhergehenden Ansprüche, **dadurch gekennzeichnet, dass** der Schneideinsatz (9) eine Anlagefläche (61) aufweist, die sich am Grund (55) des Schlitzes (7) im Schaft (3) abstützt.

10. Werkzeug nach Anspruch 9, **dadurch gekennzeichnet; dass** zwischen der Anlagefläche (61) und dem Grund (55) des Schlitzes (7) mindestens ein Freiraum gegeben ist.

11. Werkzeug nach einem der vorhergehenden Ansprüche, **dadurch gekennzeichnet, dass** der Schaft (3) mindestens einen Kühl-/Schmiermittelkanal (57) aufweist.

12. Werkzeug nach Anspruch 10 oder 11, **dadurch gekennzeichnet, dass** im Berührungsbereich zwischen der Außenseite des Schneidkörpers (9) und der Innenfläche des den Schneidkörper (9) aufnehmenden Schlitzes (7) im Schaft (3) ein Kühl-/Schmiermittelkanal (69,69') gegeben ist, der mit dem mindestens einen Kühl-/Schmiermittelkanal (57) im Schaft (3) über den Freiraum zwischen der Anlagefläche (61) des Schneideinsatzes (9) und dem Grund (55) des Schlitzes (7) im Schaft (3) in Fluidverbindung steht.

13. Werkzeug nach einem der Ansprüche 10 bis 12, **dadurch gekennzeichnet, dass** im Grundkörper (11) des Schneideinsatzes (9) mindestens ein Kühl-/Schmiermittelkanal (73,73') vorgesehen ist, der mit dem mindestens einen Kühl-/Schmiermittelkanal (57) im Schaft (3) über den Freiraum zwischen der Anlagefläche (61) des Schneideinsatzes (9) und dem Grund (55) des Schlitzes (7) im Schaft (3) in Fluidverbindung steht.

## Claims

1. A tool (1) for machining workpieces, comprising
- a shank (3) and comprising
- a cutting insert (9) interchangeably held by said shank (3) and having a basic body (11), wherein
- the shank (3) comprises a slot (7) serving to accommodate the cutting insert (9),
- wherein the basic body (11) has a central section (13) having a centre axis (21) and having at least one convexly curved centring surface (25, 25') running substantially in the direction of said centre axis (21), and also has
- at least one driver (23, 23') emerging from the central section (13), wherein
- the slot (7) in the shank (3) has at least one inner surface region (53, 53') interacting with the at least one centring surface (25, 25'), wherein
- the centring surfaces (25, 25') are sectional areas of an imaginary lateral surface of a conical section, said lateral surface tapering toward the front side (15) of the tool (1), and wherein
- the inner surface region (53, 53') of the slot (7) is of corresponding design,
**characterized in that**
- the at least one centring surface (25, 25') extends up to an end face (29) of the basic body (11) of the cutting insert (9).

2. The tool according to claim 1, **characterized in that** the at least one centring surface (25, 25') forms the outer surface of the central section (13) of the basic body (11).

3. The tool according to any one of the preceding claims, **characterized in that** the at least one driver (23, 23') has a driving surface (49, 49') which is supported on a supporting surface (inner surface region (53, 53')) formed in the slot (7) of the shank (3).

4. The tool according to any one of the preceding claims, **characterized in that** the basic body (11) has two drivers (23, 23').

5. The tool according to claim 4, **characterized in that** the drivers (23, 23') originate opposite one another from the central section (13).

6. The tool according to any one of claims 3 to 5, **characterized in that** the at least one driving surface (49, 49') encloses an acute angle with a plane in which the center axis (21) of the basic body (11) of the cutting insert (9) lies.

7. The tool according to claim 6, **characterized in that** the driving surfaces (49, 49') of two drivers (23, 23') converge in the direction of the front side (15) of the tool (1).

8. The tool according to any one of the preceding claims, **characterized in that** the basic body (11) of the cutting insert (9) is designed to be centrally symmetric relative to its centre axis (21).

9. The tool according to any one of the preceding claims, **characterized in that** the cutting insert (9) has an abutment surface (61) which is supported on the root (55) of the slot (7) in the shank (3).

10. The tool according to claim 9, **characterized in that** there is at least one free space between the abutment surface (61) and the root (55) of the slot (7).

11. The tool according to any one of the preceding claims, **characterized in that** the shank (3) has at least one coolant/lubricant passage (57).

12. The tool according to claim 10 or 11, **characterized in that** there is a coolant/lubricant passage (69, 69') in the contact region between the outer side of the cutting body (9) and the inner surface of the slot (7), accommodating the cutting body (9), in the shank (3), said coolant/lubricant passage (69, 69') being in fluidic connection with the at least one coolant/lubricant passage (57) in the shank (3) via the free space between the abutment surface (61) of the cutting insert (9) and the root (55) of the slot (7) in the shank (3).

13. The tool according to any one of claims 10 to 12, **characterized in that** at least one coolant/lubricant passage (73, 73') is provided in the basic body (11) of the cutting insert (9), said coolant/lubricant passage (73, 73') being in fluidic connection with the at least one coolant/lubricant passage (57) in the shank (3) via the free space between the abutment surface (61) of the cutting insert (9) and the root (55) of the slot (7) in the shank (3).

## Revendications

1. Outil (1) pour l'usinage par enlèvement de copeaux de pièces avec
- un arbre (3) et avec
- un insert de découpe (9) maintenu par celui-ci de manière interchangeable, présentant un corps de base (11), dans lequel
- l'arbre (3) comprend une fente (7) servant à la réception de l'insert de découpe (9),
- dans lequel le corps de base (11) présente une section centrale (13) avec un axe médian (21) et avec au moins une face de centrage (25, 25') courbée de manière convexe, s'étendant essentiellement dans sa direction, en outre
- au moins un toc d'entraînement (23, 23') partant de la section centrale (13), dans lequel
- la fente (7) présente dans l'arbre (3) au moins une région de face interne (53, 53') coopérant avec l'au moins une face de centrage (25, 25'), dans lequel
- les faces de centrage (25, 25') sont des faces partielles d'une enveloppe de section conique imaginaire qui se rétrécit vers le côté avant (15) de l'outil (1), et dans lequel
- la région de face interne (53, 53') de la fente (7) est réalisée en conséquence,
**caractérisé en ce que**
- l'au moins une face de centrage (25, 25') s'étend jusqu'à un côté frontal (29) du corps de base (11) de l'insert de découpe (9).

2. Outil selon la revendication 1, **caractérisé en ce que** l'au moins une face de centrage (25, 25') forme la face externe de la section centrale (13) du corps de base (11).

3. Outil selon une des revendications précédentes, **caractérisé en ce que** l'au moins un toc d'entraînement (23, 23') présente une face de toc d'entraînement (49, 49') qui s'appuie sur une face d'appui réalisée dans la fente (7) de l'arbre (3) (région de face interne (53, 53')).

4. Outil selon une des revendications précédentes, **caractérisé en ce que** le corps de base (11) présente deux tocs d'entraînement (23, 23').

5. Outil selon la revendication 4, **caractérisé en ce que** les tocs d'entraînement (23, 23') proviennent de la section centrale (13) en face l'un de l'autre.

6. Outil selon une des revendications 3 à 5, **caractérisé en ce que** l'au moins une face de toc d'entraînement (49, 49') inclut un angle aigu avec un plan dans lequel l'axe médian (21) du corps de base (11) de l'insert de découpe (9) se situe.

7. Outil selon la revendication 6, **caractérisé en ce que** les faces de toc d'entraînement (49, 49') de deux tocs d'entraînement (23, 23') convergent en direction du côté avant (15) de l'outil (1).

8. Outil selon une des revendications précédentes, **caractérisé en ce que** le corps de base (11) de l'insert de découpe (9) est réalisé de manière symétrique par rapport à un point à son axe médian (21).

9. Outil selon une des revendications précédentes, **caractérisé en ce que** l'insert de découpe (9) présente une face d'appui (61) qui s'appuie sur la base (55) de la fente (7) dans l'arbre (3).

10. Outil selon la revendication 9, **caractérisé en ce qu'**au moins un espace libre est donné entre la face d'appui (61) et la base (55) de la fente (7).

11. Outil selon une des revendications précédentes, **caractérisé en ce que** l'arbre (3) présente au moins un canal de réfrigérant/lubrifiant (57).

12. Outil selon la revendication 10 ou 11, **caractérisé en ce qu'**un canal de réfrigérant/lubrifiant (69, 69') est donné dans la région de contact entre le côté externe du corps de découpe (9) et la face interne de la fente (7) recevant le corps de découpe (9) dans l'arbre (3), lequel est en connexion fluidique avec l'au moins un canal de réfrigérant/lubrifiant (57) dans l'arbre (3) par le biais de l'espace libre entre la face d'appui (61) de l'insert de découpe (9) et la base (55) de la fente (7) dans l'arbre (3).

13. Outil selon une des revendications 10 à 12, **caractérisé en ce qu'**au moins un canal de réfrigérant/lubrifiant (73, 73') est prévu dans le corps de base (11) de l'insert de découpe (9), lequel est en connexion fluidique avec l'au moins un canal de réfrigérant/lubrifiant (57) dans l'arbre (3) par le biais de l'espace libre entre la face d'appui (61) de l'insert de découpe (9) et la base (55) de la fente (7) dans l'arbre (3).
